(19) Europäisches Patentamt
European Patent Office
Office européen des brevets

(11) Publication number: **0 291 090 B1**

# (12) EUROPEAN PATENT SPECIFICATION

(45) Date of publication of patent specification: **30.09.92**

(51) Int. Cl.$^5$: **G02B 6/16**

(21) Application number: **88107764.8**

(22) Date of filing: **13.05.88**

## (54) Plastic fibers for optical transmission of information.

(30) Priority: **15.05.87 JP 118192/87**

(43) Date of publication of application:
**17.11.88 Bulletin 88/46**

(45) Publication of the grant of the patent:
**30.09.92 Bulletin 92/40**

(84) Designated Contracting States:
**BE CH DE FR GB IT LI NL SE**

(56) References cited:

**PATENT ABSTRACTS OF JAPAN, vol. 10, no. 222 (M-504)[2278], 2nd August 1986; & JP - A - 61 058 722**

**PATENT ABSTRACTS OF JAPAN, vol.7, no. 26, (P-172) [1171], 2nd February 1983; & JP - A - 57 179 805**

**PATENT ABSTRACTS OF JAPAN, vol. 4, no. 7 (C-70), 19th January 1980; & JP - A - 54 139 987**

**PATENT ABSTRACTS OF JAPAN, vol. 10, no. 296 (c-377)[2352], 8th October 1986; & JP - A - 61 113 604**

(73) Proprietor: **IDEMITSU PETROCHEMICAL CO. LTD.**
**1-1, Marunouchi 3-chome Chiyoda-ku**
**Tokyo 100(JP)**

(72) Inventor: **Takase, Minoru**
**Idemitsu Petrochemical Co.Ltd. 1-1 Anegasakikaigan**
**Ichihara-shi Chiba-ken(JP)**
Inventor: **Ueno, Naoya**
**Idemitsu Petrochemical Co.Ltd. 1-1 Anegasakikaigan**
**Ichihara-shi Chiba-ken(JP)**
Inventor: **Arashi, Toshimi**
**Idemitsu Petrochemical Co.Ltd. 1-1 Anegasakikaigan**
**Ichihara-shi Chiba-ken(JP)**

(74) Representative: **TER MEER - MÜLLER - STEINMEISTER & PARTNER**
**Mauerkircherstrasse 45**
**W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**PATENT ABSTRACTS OF JAPAN**, vol. 11, no. 40, (P-544)[2487], 5th February 1987; & JP - A - 61 210 303

**PATENT ABSTRACTS O JAPAN**, vol. 11, no. 335 (P-632)[2782], 4th November 1987; & JP - A - 62 118 307

## Description

### Field of the Invention

The invention is concerned with new plastic fibers for optical transmission of information, hereinafter also designated as plastic optical transmittable fibers. As further details, this refers to plastic optical transmittable fibers which are suitable as fibers for the optical transmission of information to be used as means of optical sensor and optical communications, and excellent in heat resistance. In addition, the optical transmission loss and the flexibility have been improved.

### Conventional Technology

In recent years, optical communication technologies have made rapid progress applying optical fibers as an information transmitting circuit and is now being practised in various industrial fields.

The optical fibers for optical transmission are classified into two categories, namely, the optical fibers of the inorganic glass system such as quartz which has been broadly used so far and the optical transmittable fiber made of certain forms of plastics. The latter plastic optical fiber is strong, easy in handling, and low-priced compared with inorganic optical fiber in inorganic glass system. Therefore, this type of fiber has been actively developed as communications between short distances and has already been put to practical use.

For the plastic optical transmitters fibers, thermoplastic resins in transparency are used as excellent chemical materials. This fiber forms a homocentric configuration to increase the refractive index of the core higher than that of the cladding. The incident ray emerged at one end is transmitted to the other end continuing the total reflection at the boundary between the core and cladding.

As for the core layer of such plastic optical transmittable fiber, examples of thermoplastic materials are proposed as follows. A polycarbonate, polystyrene, polymethyl-methacrylate, copolymer of methyl methacrylate and maleic anhydride or styrene; a copolymer of methyl methacrylate and isobornyl methacrylate or bornyl methacrylate. Judging from the excellency in heat resistance and mechanical strength, the polycarbonate is preferable.

While, for the layer of cladding, when using the polycarbonate resin for the layer of core, for example, polymethyl methacrylate (Japanese Patent Unexamined Publication (Kokai) 210303, 1986), copolymer formed from monomer such as methyl methacrylate, maleic anhydride, styrene, $\alpha$-methyl styrene and so forth (Japanese Patent Unexamined Publication (Kokai) 216105, 1984), poly-4-methyl pentene-1(Japanese Patent Unexamined Publication (Kokai) 210303, 1986) are proposed.

However, the optical transmittable fibers using polymethyl methacrylate and copolymer of said methyl methacrylate system for the layer of cladding are not only unsatisfactory in head resistance but difficult for the use under the environmental state at high temperature. Also, the poly-4-methyl pentene-1 is satisfactory in heat resistance, but inferior in transparency. And the optical transmittable fiber used for the layer of cladding has disadvantages which the optical transmission loss increases and the flexibility is inferior. Optical fibers of the above types are disclosed in the documents JP-A-61-58 722 and JP-A-57-17 9805

### Brief description of the several views of the drawing

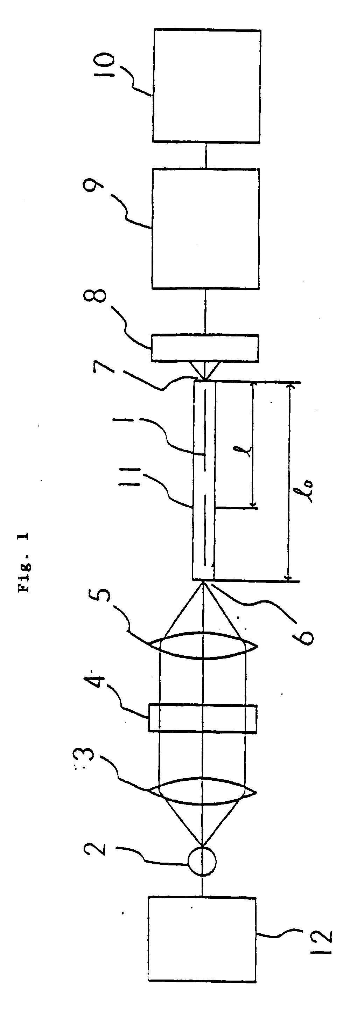

Fig. 1 shows a schematic drawing of the apparatus for measuring the optical transmission loss of the optical transmittable fiber.

### Summary of the Invention

The invention has improved conventional disadvantages of cladding for better heat resistance aiming at providing the advanced plastic optical transmittable fibers in the optical transmission loss and the flexibility.

The inventors have made progress eagerly in their studies for developing the plastic optical transmittable fiber with favorite properties. The 4-methyl pentene-1 and other $\alpha$-olefin having particular carbon atoms were polymerized in desired ratio. As a result, the above-mentioned copolymer containing the 4-methyl pentene-1 as monomer unit is excellent in transparency and flexibility compared with the homopolymer of the 4-methyl pentene-1. The inventors paid attention to the fact that the plastic optical transmittable fiber has the satisfactory heat resistance corresponding to said homopolymer and found out the possibility of accomplishing the objects by using the copolymer as materials for the cladding layer. Consequently, the invention has been completely based on this information obtained from the study as

mentioned above.

Namely, as for the plastic optical transmittable fiber constituting the basic structural units of the layers of core and cladding, the invention provides the plastic optical transmittable fiber with features that the said layer of cladding consists of copolymers composed of 70 to 99.5 mole% of the 4-methyl pentene-1 unit and 30 to 0.5 mole% of an $\alpha$ olefin unit of carbon atoms between 2 and 24, and the refractive index of said layer of core increases above 0.01 than that of the layer of cladding.

Detailed description of the favorable embodiments of invention

The plastic optical fiber of the invention is defined in claim 1. The fiber comprises the basic structural units of the layers of core and cladding.

The copolymer of the 4-methyl pentene-1 and other $\alpha$-olefin of 2 to 24 carbon atoms is used as materials of said layer of cladding.

This copolymer must constitute 70 to 99.5 mole% of the 4-methyl pentene-1 unit and 30 to 0.5 mole% of other $\alpha$-olefin utit of 2 to 24 carbon atoms.

When said $\alpha$-olefin unit is less than 0.5 mole% in the copolymer, the transparency is not satisfactory. Therefore, even if applying this for the layer of cladding, the optical transmission loss cannot be improved and also, when said $\alpha$-olefin unit is more than 30 mole% in the copolymer, the heat resistance of copolymer which has primarily is impaired. Therefore, the optical transmittable fiber using this copolymer for the layer of cladding is inferior in heat resistance.

As for an $\alpha$-olefin to give other $\alpha$-olefin unit of 2 to 24 carbon atoms, examples of the olefin are given as ethylene, propylene, 1-butene, 1-pentene, 1-hexene, 1-octene, 1-decene, 1-dodecene, 1-tetradecene, 1-hexadecene, 1-octadecene, and 1-eicosene and so forth.

As for an $\alpha$-olefin group, one species may be used or more than two species may be combined.

A proferable $\alpha$-olefin is at least a species to be selected in the group of hexene-1, octene-1, and decene-1.

Said copolymers for the layer of cladding of plastic optical transmittable fiber in this invention can be formed according to the method of prior art(Japanese Patent Examined Publication 22077, 1975, Japanese Patent Unexamined Publication (Kokai) 139987, 1979 and 113604, 1986). For example, in the presence of polymerization catalyst and in the appropriate solvent, the prescribed amount of 4-methyl pentene-1 and other $\alpha$-olefin of carbon atoms 2 to 24 are polymerized to slurry in a preferable temperature range of 20 to 100 ° C, preferably 30 to 80 ° C. Thus, the method of producing said copolymer is adopted.

In this case, as for the polymerization catalyst for use, stereospecific catalyst such as an Ziegler system catalyst and the Natta system catalyst is preferable. For example a combination of titanium catalyst and organoaluminum compound constituents and a further combination of organosilicon compound are given preferably. Among those catalysts, a combination of titanium catalyst and organoaluminum compound constituents is preferable for polymerization catalyst.

As for said catalysts constituents of titanium, for example, titanium trichloride; active titanium trichloride obtained by reducing titanium tetrachloride with reductant selected from the group of hydrogen, aluminum, titanium and organoaluminum compound; a complex containing at least titanium, magnesium, and halogen such as titanium halide supported on a carrier of magnesium compound containing halogen; a complex containing titanium, magnesium, halogen and diester as essential constituents are given.

Among those catalytic constituents, the titanium trichloride is preferable.

While, as for catalytic constituents of organoaluminum compound, for example, trialkyl aluminum, dialkyl aluminum halide, alkyl aluminum sesquihalide, dialkyl aluminum hydride with an alkyl group of 1 to 10 carbon atoms are given.

As for said halogen of halide, chlorine, bromine, and iodine are illustrated.

In this group, dialkyl aluminum halide is preferable, particularly diethyl aluminumchloride is preferable.

Also, as for catalytic constituents of organosilicon compound, examples of trimethyl methoxysilane, trimethyl ethoxysilane, trimethyl-n-propoxysilane, triethyl methoxysilane, tri-n-propyl methoxysilane and tri-iso-propyl methoxysilane as trialkyl alkoxysilane, and triphenyl methoxysilane as triaryl alkoxysilane are given.

As for said appropriate solvent, inactive hydrocarbon, for example, butane, pentane, hexane, heptane, octane, decane, dodecane, and kerosene as aliphatic hydrocarbon, cyclopentane, cyclohexane and so forth as alicyclic hydrocarbon are preferable for use.

Reactions in the formation of polymers are preferably proceeded in the presence of inactive gas such as nitrogen and argon. Also, these reactions may be proceeded at atmospheric pressure or under the pressurized state.

In addition, in the solvent of said inactive hydrocarbon, 4-methylpentene-1 and/or a part of other α-olefin of 2 to 24 carbon atoms is prepolymerized by contacting said catalyst for preliminary polymerization under the appropriate conditions and consequently polymerized.

Thus, the refractive index of copolymer in the 4-methyl pentene-1 system referring to this invention is normally less than 1.50 and the melting point (Tm) is in the range of 200 to 250 °C. This copolymer is not only excellent in transparency and flexibility compared with the poly-4-methyl pentene-1, but heat resistant corresponding to said homopolymer. Therefore, when employing the copolymer for the layer of cladding, the plastic optical transmittable fiber improved the optical transmission loss and flexibility and having excellency in heat resistance can be obtained.

While, concerning materials to be used for the layer of core in the plastic optical transmittable fiber of the invention, there is no limitation as far as the refractive index of the layer of core is 0.01 or more than that of said layer of cladding and the polymer is excellent in transparency.

When the difference between the refractive index of said layer of core and that of said layer of cladding is less than 0.01, this cannot be construed as optical transmittable fiber with the small optical transmission loss.

As for polymer constituting said layer of core, for example, polycarbonate polymer, polystyrene, polymethyl methacrylate and so forth can be employed and the polycarbonate polymer is preferable.

Said polycarbonate polymer is represented by the general formula:

— O - R - X - R - O - CO —     (1)

and -R - X - R- is represented by the following structural formula such as an alicyclic group in polycarbonates :

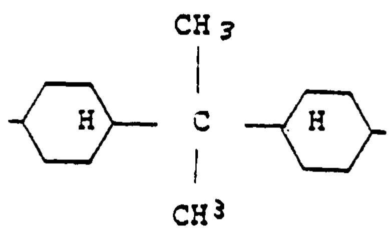

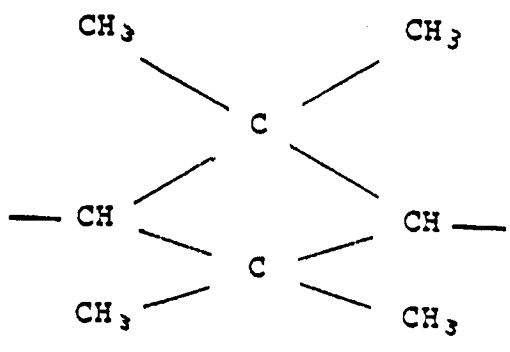

and by the structural formula such as an aromatic group in polycarbonates;

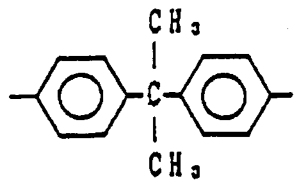

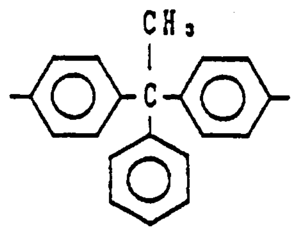

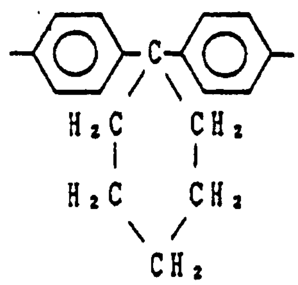

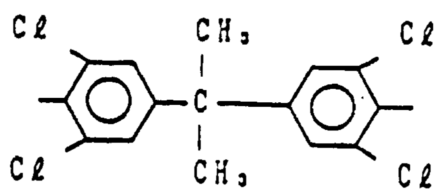

and

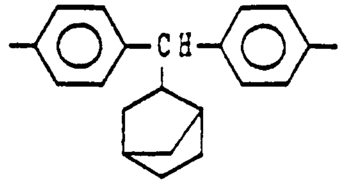

and so forth

Also, copolymers with dihydroxy compounds such as 4,4′ - dihydroxydiphenylether, ethylene glycol, p - xylene glycol, 1,6 - hexanedior and so forth, hetero-polymer having ester bonding in addition to carbonate bonding and heat resistant polycarbonate which X represented by the said formula(1) is a sulfonic group or a carbonyl group can be employed.

In those polycarbonate polymers, an aromatic polycarbonate to be induced from bisphenol A and having a unit represented by the formula(II) is particularly preferable.

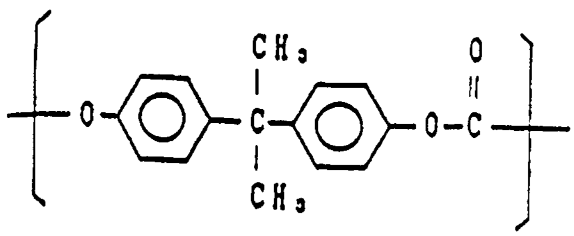

( II )

To produce satisfactorily the plastic optical transmittable fiber of the invention, for example, the following process may be adopt. As a composite spinning process, in the clean environmental state, 4-methyl pentene-1 system copolymer constituting said layer of cladding and polymer constituting said layer of core and extruded in the molten state to form the structures with the spinning and coating processes. Also, a process combined with the spinning and coated processes may be employed, but the composite spinning process is advantageous from a point of view on the simplicity of producing processes.

The thickness of layer of cladding is normally 2 to several 10 μm, preferably 5 to 20 μm.

Thus, the external surface of plastic optical transmittable fibers formed may be coated for giving further heat resistance and strength by using heat resistant coating materials, if desired.

As for the heat resistant coating materials, for example, polyethylene, crosslinked polyethylene, polyacetal, polyvinylidenefluoride, polycarbonate or polyamide resins such as 6-nylon and 6,6-nylon can be employed. Even if such heat resistant coating materials would be used, the optical transmission loss is not affected.

For the plastic optical transmittable fibers of the invention, 4-methylpentene-1 system copolymer of particular composition is used for the layer of cladding and the optical transmission loss is small and the flexibility and heat resistance are so excellent that the particular composite fibers are suitable for optical transmission fibers to be used as means of optical sensor and communications and to be used properly under the environment at high temperature.

## Description of the Preferred Embodiment

The detailed embodiment of the invention are described as hereunder and the invention shall not be restricted by those embodiments.

Also, the optical transmission loss has been measured according to the systems illustrated in Fig. 1, that is, the light given from a halogen lamp(2) becomes monochromatic by an interference filter(4) after changed to parallel rays by lens (3) and is focused on lens(5) with the same numerical aperture as the optical transmittable fiber(1). The light is transmitted in the direction of incidence upon the optical transmittable fiber(1) by accommodating and positioning the plane of incidence(6) of optical transmittable fiber to this focus point. The light which is incident from the plane of incidence(6) exists from the exit plane (7). The exit light is varied to the current with its intensity by photodiode(8) with a fully wide area and read as voltage value by voltmeter(10) after the exit light was amplified by the current voltage commutable amplifier(9).

The optical transmission loss is measured according to the following procedure.

The optical transmittable fiber(1) is cut to the length of $\ell o$ and at right angles to the axis of fiber positioning both planes. After finishing the planes smoothly and flatly, the plane of incidence(6) and the exit plane (7) are loaded and fixed on said unit for no movement during the measurement. The indicating value of voltmeter is read in a darkroom. The voltage value is set to (Io). Next, turn on the room light, remove the exit plane (7) from the unit, and cut off the optical transmittable fiber(1) on the position(11) of the length ( $\ell$ ) from this plane. And the plane of optical transmittable fiber loaded on the unit is finished to the surface of the right angle to the axis of fiber as well as the beginning and loaded to the unit as a new exit plane. During those operations, check that the plane of incidence (6) for holding constantly the amount of incident light is fixed. Again in the darkroom, indicating values of voltmeter are read(I). The optical transmission loss is calculated by the following formula.

$$\alpha = \frac{10}{\ell} \log \frac{I}{Io} \quad (dB/km)$$

Also, as for the flexibility, the obtained optical transmittable fiber was wound around a cylinder with a different external diameter and the radius(r) which the cladding begins to become white was measured. Smaller value(r) the better flexibility is shown.

Example 1 of Preparation

Preparation of Copolymer(A) of 4-methyl pentene-1

Put titanium trichloride 10 millimole and diethylaluminum monochloride 20 millimole, and additionally 1,660 g. of 4-methyl pentene-1 and 32 g, of octene-1 into a reaction vessel of 5 ℓ , and its polymerization was proceeded at temperature of 50 ° C for two hours.

After the polymerization reaction, the product was separated from the solution by filtration, washed with a mixture of methanol and hydrochloride for decomposing catalyst and dried to obtain copolymers.

As a result of analysis based on $^{13}C$-NMR about the product, copolymer, say poly-4-methyl pentene-1 (P4MP1) containing in the proportion of 1.4 mole% for octene-1 unit was observed. The melting point (Tm) of this copolymer was 230 ° C and the refractive index was 1.46. This copolymer is represented as copolymer P4MP1 (A).

Example 2 of Preparation

Preparation of Copolymer(B) of 4-methyl pentene-1

Copolymers were obtained in the same way as in the preparation of copolymer (A) except that the amount of 1,660g for 4-methyl pentene-1 was changed to 1,630g for 4-methyl pentene-1 and the amount of 32g for octene-1 was changed to 70g for octene-1.

As a result of analysis based on $^{13}C$-NMR about the copolymers, copolymer, say P4MP1 containing in the proportion of 3.1 mole% for octene-1 unit was observed. The melting point (Tm) of this copolymer was 225 ° C and the refractive index was 1.46. This copolymer is represented as copolymer P4MP1(B).

Example 3 of Preparation

Preparation of Copolymer(C) of 4-methyl pentene-1

Copolymers were obtained in the same way as in the preparation of copolymer (A) except that the amount of 1,660g for 4-methyl pentene-1 was changed to 1,630g for 4-methyl pentene-1 and the amount of 32g for octene-1 was changed to 112g for octene-1.

As a result of analysis based on $^{13}C$-NMR about the copolymers, copolymer, say P-4MP1 containing in the proportion of 5.0 mole% for octene-1 unit was observed. The melting point (Tm) of this copolymer was 220 ° C and the refractive index was 1.46.
This copolymer is represented as copolymer P4MP1(C).

Example 4 of Preparation

Preparation of Copolymer(D) of 4-methyl pentene-1

Copolymers were obtained in the same way as in the preparation of copolymer (A) except that decene-1 56g was used instead of octene-1 32g and the amount of 1,660g for 4-methyl pentene-1 was changed to 1,650g for 4-methyl pentene-1.

As a result of analysis based on $^{13}C$-NMR about the copolymers, copolymer, say P4MP1 containing in the proportion of 2.0 mole% for decene-1 unit was observed. The melting point (Tm) of this copolymer was 225 ° C and the refractive index was 1.46. This copolymer is represented as copolymer P4MP1(D).

Example 5 of Preparation

Preparation of Copolymer(E) of 4-methyl pentene-1

Copolymers were obtained in the same way as in the preparation of copolymer (A) except that hexene-1 101g was used instead of octene-1 32g and the amount of 1,660g for 4-methyl pentene-1 was changed to 1,580g for 4-methyl pentene-1.

As a result of analysis based on $^{13}C$-NMR about the copolymers, copolymer, say P4MP1 containing in the proportion of 6.0 mole% of hexene-1 unit was observed. The melting point (Tm) of this copolymer was 220 ° C and the refractive index was 1.46. This copolymer is represented as copolymer P4MP1(E).

Example 6 of Preparation

Preparation of Copolymer (F) of 4-methyl pentene-1

Put titanium trichloride 10 millimole and diethylaluminum monochloride 20 millimole, and additionally 1,680 g, of 4-methyl pentene-1 into a reaction vessel of 5 ℓ , and polymerization was proceeded at temperature of 50 ° C for two hours.

After the polymerization reaction, the product was separated from the solution by filtration, washed with a mixture of methanol and hydrochloride for decomposing catalyst and dried it to obtain polymers. The melting point (Tm) of this polymer was 235 ° C and the refractive index was 1.46. This polymer is represented as homo-P4MP1(F).

Example 1 of Embodiments

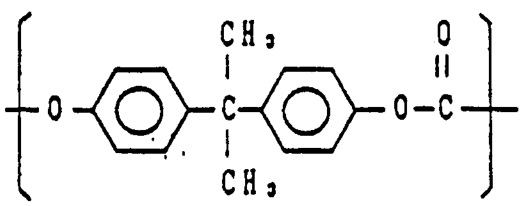

Employing polycarbonate(Refractive index 1,585, Tg 148 ° C) with the above represented repetition unit to be induced from bishphenol A as polymers for the core and also the copolymer, say P4MP1(A) obtained in Example 1 of Preparation as polymers for cladding, the polymer was supplied to the spinning head of combined spinning machine having nozzles of 3mm in diameter by the screw molten extruder arranged at temperature of 260 ° C and 310 ° C respectively. In addition, after extruding the product from the nozzles and cooling it for solidification, the product was pulled out at a speed of 20m/min. Consequently, the plastic optical transmittable fiber with the layer of core of 980 µm in diameter and the layer of cladding of 10 µm in thickness was obtained.

As for the optical transmittable fiber, the optical transmission loss was measured by using the optical wavelength of 660nm and the flexibility was measured by the above mentioned method.

Table 1 shows the results

Example 2 of Embodiments

Except the case that the copolymer, say P4MP1(B) obtained in Example 2 of Preparation was used instead of copolymer, say P4MP1(A) in Example 1 of Embodiments, the plastic optical transmittable fiber was formed and the optical transmission loss and the flexibility were measured as well as Example 1 of Embodiments.

Table 1 shows the results.

Example 3 of Embodiments

Except the case that the copolymer, say P4MP1(C) obtained in Example 3 of Preparation was used

instead of copolymer, say P4MP1(A) in Example 1 of Embodiments, the plastic optical transmittable fiber was formed and the optical transmission loss and the flexibility were measured as well as Example 1 of Embodiments.

Table 1 shows the results.

Example 4 of Embodiments

Except the case that the copolymer, say P4MP1(D) obtained in Example 4 of Preparation was used instead of copolymer, say P4MP1(A) in Example 1 of Embodiments, the plastic optical transmittable fiber was formed and the optical transmission loss and the flexibility were measured as well as Example 1 of Embodiments.
Table 1 shows the results.

Example 5 of Embodiments

Except the case that the copolymer, say P4MP1(E) obtained in Example 5 of Preparation was used instead of copolymer, say P4MP1(A) in Example 1 of Embodiments, the plastic optical transmittable fiber was formed and the optical transmission loss and the flexibility were measured as well as Example 1 of Embodiments.
Table 1 shows the results.

Example 1 of Comparison

Except the case that the copolymer, say P4MP1(F) obtained in Example 6 of Preparation was used instead of copolymer, say P4MP1(A) in Example 1 of Embodiments, the plastic optical transmittable fiber was formed and the optical transmission loss and the flexibility were measured as well as Example 1 of Embodiments.

Table 1 shows the results.

Table 1

| | Polymer for clad material | Optical transmission loss (dB/m) | Flexibility (mm) |
|---|---|---|---|
| Example 1 | P4MP1 (A) | 1.9 | 7 |
| Example 2 | P4MP1 (B) | 0.9 | less than 1 |
| Example 3 | P4MP1 (C) | 0.85 | less than 1 |
| Example 4 | P4MP1 (D) | 1.5 | 3 |
| Example 5 | P4MP1 (E) | 1.2 | 5 |
| Coexample 1 | HomoP4MP1 (F) | 3.3 | 20 |

## Claims

1. A plastic fiber for the optical transmission of information comprising a core of an organic polymer and a cladding comprising 4-methyl-pentene-1 units as basic structural units, **characterized in that** the core

is formed of a polycarbonate system polymer and the cladding is comprised of a copolymer having 70 to 99.5 mole % of 4-methyl pentene-1 units and 30 to 0.5 mole % of other α-olefin units having 2 to 24 carbon atoms and the refractive index of the core material is higher than that of cladding by at least 0.01.

2. The plastic fiber according to claim 1, **characterized in that** the α-olefin for said α-olefin units is selected from the group comprising hexene-1, octene-1 and decene-1.

3. The plastic fiber according to claim 1, **characterized in that** said layer of the core is a polycarbonate formed by using bisphenol A.

**Patentansprüche**

1. Kunstoffaser für die optische Informationsübertragung, umfassend einen Kern aus einem organischen Polymer und einen Mantel, der 4-Methyl-penten-1-Einheiten als Grundstruktureinheiten umfaßt, **dadurch gekennzeichnet,** daß der Kern aus einem Polycarbonatsystem-Polymer gebildet ist und der Mantel ein Copolymer mit 70 bis 99,5 Mol-% 4-Methyl-penten-1-Einheiten und 30 bis 0,5 Mol-% anderer α-Olefin-Einheiten mit 2 bis 24 Kohlenstoffatomen umfaßt und daß der Brechungsindex des Kernmaterials um mindestens 0,01 höher ist als der des Mantels.

2. Kunststoffaser nach Anspruch 1, **dadurch gekennzeichnet,** daß das α-Olefin für die α-Olefin-Einheiten aus der Hexen-1, Octen-1 und Decen-1 umfassenden Gruppe ausgewählt ist.

3. Kunststoffaser nach Anspruch 1, **dadurch gekennzeichnet,** daß die Schicht des Kerns ein unter Verwendung von Bisphenol A gebildetes Polycarbonat ist.

**Revendications**

1. Fibre en matière plastique servant à la transmission optique d'informations, comprenant un coeur de polymère organique et une gaine comprenant des motifs de 4-méthylpentène-1 comme motifs constitutifs de base, caractérisée en ce que le coeur est formé d'un polymère constitué d'un système polycarbonate et la gaine est constituée d'un copolymère possédant 70 à 99,5% en moles de motifs de 4-méthylpentène-1 et de 30 à 0,5% en moles de motifs d'une autre α-oléfine comportant 2 à 24 atomes de carbone et en ce que l'indice de réfraction de la matière du coeur est supérieur d'au moins 0,01 à celui de la gaine.

2. Fibre en matière plastique selon la revendication 1, caractérisée en ce que l'α-oléfine desdits motifs d'α-oléfine est choisie dans le groupe comprenant l'hexène-1, l'octène-1 et le décène-1.

3. Fibre en matière plastique selon la revendication 1, caractérisée en ce que ladite couche du coeur est du polycarbonate formé avec du bisphénol A.

Fig. 1